# EUROPEAN PATENT SPECIFICATION

(11) **EP 1 606 174 B1**
(45) Date of publication and mention of the grant of the patent: **19.07.2006**
(21) Application number: 04718999.8
(22) Date of filing: 10.03.2004
(51) Int. Cl.: B65D 1/38

(54) **PALLET LOAD-INFESTATION MONITORING**
BEWACHUNG VON BEFALL VON PALETTENLADUNG
CONTROLE DE L'INFESTATION D'UNE CHARGE PALETTISÉE

(30) Priority: 12.03.2003 GB 0305660; 13.03.2003 US 454290 P
(43) Date of publication of application: 21.12.2005
(73) Proprietor: Pallet Detection Systems Ltd, Paisley PA3 1QS (GB)
(72) Inventor: LAWSON, Iain, Paisley PA2 1LU (GB)
(74) Representative: Thomson, Craig Richard
(86) International application number: PCT/GB2004/001053
(87) International publication number: WO 2004/080817

(56) References cited:
- US-A- 6 079 151
- US-A1- 2003 005 862

## Description

### Field of the invention

The present invention relates to load-bearing pallets and provides improvements therein which enable the condition of a load to be monitored.

### Background of the invention

A pallet is a portable platform adapted for convenient handling by a fork-lift truck or crane or the like lifting machinery and is typically used for handling loads between a manufacturing outlet and storage or distribution points. Thus, multiple pallets may be used to transport goods from a factory to a destination by a route that may involve a number of intermediate way points where the mode of transport may changed (truck, aircraft, ship, etc.) or the goods need to be off-loaded for inspection or temporary storage e.g. in a warehouse. The pallet once loaded with the goods travels to the point of delivery of the goods where the goods are unloaded and the pallet is then available for re-use.

The needs of international commerce are such that pallets have become standardised at least in so far as dimensions are concerned and reference may be made to the so-called "Euro-pallet" in this regard which has a deck area defined by a width of 80 cm and a length of about 120 cm.

Traditionally pallets have been made from wood, providing a parallel-sided load deck that is assembled from closely spaced boards, short planks or spars of wood, or rails supported upon bearers that are typically thick wooden battens or "stringers", or riser blocks, which are spaced apart and usually aligned transversely with respect to the longitudinal axis of the boards making up the load deck. In some pallet designs e.g. as in GB 2 291 037, the stringers are aligned diagonally under the load deck and corner blocks raise the deck and stringers sufficiently for access by lifting forks. In other pallet designs, especially wooden pallets, these stringers or blocks may be tied by further bracing cross-members that help retain the structural integrity of the pallet and also serve as ground-engaging skids or rests upon which the pallet stands. In some cases the pallet may comprise opposed load decks so that it is fully invertible and thus useful "either way up".

Wooden pallets have a limited period of utility due to susceptibility to mechanical damage due to rough handling thereof; deterioration due to rot arising from bacterial or fungal attack, especially when exposed to damp conditions; contamination due to dirt or fluids penetrating the generally rough unfinished timber surface; and they may also become weakened or friable due to attack by termites, boring insects or mites. Environmental concerns about depletion of tree stock as a natural resource have caused re-consideration about the use of wood for pallets.

Furthermore, the need to find uses for recycling waste products have also contributed to synthetic materials e.g. reinforced or filled resin composites or recycled waste plastics, becoming popular for the manufacture of pallets, e.g. as described in EP 1 207 178. Use of synthetic materials is also considered to offer advantages of longer useful life for the pallet produced therefrom, and improved hygiene and sanitary control by use of a material that is unattractive to rodents and insects, and is also less susceptible to contamination by bacteria and moulds.

A disadvantage of the use of virgin plastics is that the initial cost of the pallet is significantly elevated in comparison with that of a wooden pallet. Therefore, currently there remains a wide choice as to the material for pallet manufacture, with wooden pallets still in widespread use.

Use of other materials such as metals is also restricted by weight and expense considerations, and susceptibility to corrosion. However, metals are used in pallet manufacture, e.g. as described in EP 0 006 366, and GB 1 393 278.

There have also been proposals to modify the basic pallet design by adding components to facilitate retention of loads, e.g. side panels may be added to convert the basic load platform into a box or packing case, e.g. as described in

### EP 1 264 774:

Therefore, the use of the word "pallet" hereinafter means products of the types described above without restriction as to materials used in its construction except where specified.

Thus, it will be appreciated that pallets have seen widespread use throughout the world. Such widespread use has prompted development of management aids to provide logistical information about goods transferred by pallet. Considering the problems associated with lost or diverted pallets, bar coding labels have been employed, for tracking purposes. FR 2706422 describes a management aid which relates to the provision of an integrated circuit (or electronic "chip") on a pallet for remote communication of information such as the origin of the pallet and identification of the nature of objects supported on the pallet. FR 2697801 provides another example of such a management aid which relates to the provision of an electronic transponder on a carrying device, e.g. a box, a container or a pallet, for logistical monitoring of it or its contents.

Monitoring of the quality of stored or shipped goods, e.g. deep frozen food with regard to unintentional temperature rises is already known. For example, WO 01/072601 relates to a package for keeping goods contained therein in a reduced temperature, preserved state. The package has a temperature dependent visual indicator in the form of a label that registers exposure of the package to an inappropriate predetermined temperature e.g. by a colour change.

Quality monitoring of packaged goods is also the subject of US 2002/0139840 which relates to a "smart" fluid container that provides information on its contents by electronic means. The electronic means can include sensors for temperature, position, pressure, etc, for use in detecting mishandled or damaged contents.

The convenience offered by the pallet in transferring goods (cargo) between a warehouse and a road transport trailer and from one place to another can lead to a particular problem that has until now not been adequately addressed. The uniform "footprint" of the pallet enables the load deck of a trailer to readily carry mixed loads and to pick up and drop part-loads en route. Taking account of the long distances over which loads may be transported and the diversity of cargo handled, there is a risk that whilst in transit or in storage, perishable goods on the pallets may become infested with pests. Such pest infestation may occur at the origin of the goods by contamination with eggs or larvae, or it could arise in transit or at a way-point en route by penetration of the load by adult arthropods. There is a high risk therefore that an infestation in one pallet load of goods could lead to cross-contamination of other loads in transit or stored beside the infested pallet. However, it is not practical to adequately inspect the goods whilst loaded on each pallet, and current sampling techniques are not sufficiently reliable. In many cases access to the goods is restricted by use of shrink wrapping, or banding wound around the sides of the load on the pallet to stabilise it in transit. Therefore, a single infested pallet could lead to the contamination and destruction of a full trailer load or warehouse stock if the infestation remains unchecked. Furthermore, since the original source of the infestation is frequently difficult to identify, liability for the contamination of the load is often difficult to place, and compensation for loss impossible to recover.

An object of the present invention is to address such contamination problems such that they are obviated or mitigated.

A further object of the present invention is to provide improved pallets which offer additional technical advantages to users, specifically providing improved pallets that incorporate load-infestation monitoring means. A further object of the invention is to provide a pallet that includes means for load-infestation monitoring including a visible indicator means. A still further object of the invention is to provide a pallet having an integral device for monitoring load infestation. Yet another object of the invention is to provide a method of detecting potential deterioration in a load carried on a pallet without unpacking the load from the pallet.

### Summary of the invention

According to first aspect of the invention there is provided a pallet comprising at least a load-bearing deck and bearer members therefor, and having an accessible component located beneath the load-bearing deck and accessible from a side of the pallet, said component retaining a load-infestation monitoring device.

The load-infestation monitoring device may be configured to provide a visible indication of infestation. For example, the monitoring device may have an adhesive surface which retains a source of infestation once it has penetrated the monitoring device, i.e. traps an insect upon the adhesive surface, or at least retains evidence of infestation, such as eggs laid by a pest or its waste products.

The load-infestation monitoring device may be of a conventional type comprising a lure for attracting a pest of a type known to cause infestation. More specifically, the lure may comprise one or both of a pheromone lure and a food attractant lure.

The accessible component of the pallet conveniently may be one of the bearer members which is provided with a recess or compartment that is accessible from an exposed end-face or side of the bearer member. Alternatively, the accessible component may be an extra block or insert fixed beneath the load deck. Where the bearer member is a wooden stringer for example, the recess may be readily cut out from one of the end faces thereof to a size adapted for insertion of a load-infestation monitoring device, and the latter may be retained in the recess by an interference fit. Where the bearer member is a synthetic material, such as a plastics or resin composite, a simple one-off adjustment to the current moulds would permit a moulding operation during pallet manufacture to provide the appropriate recess in an accessible side or face of the bearer.
Optionally, for some applications of the device, the recess may be provided with a releasable cover to provide a compartment within which a load-infestation monitoring device may be located. The cover may be applied by an adhesive, or stapled or pinned in place, or provided with mechanical fixing parts such as rivets, teeth, or tags enabling the cover to be readily affixed over the recess e.g. by use of a light hammer, in a manner that does not occlude access to the device.

A suitable load-infestation monitoring device, ideally, would be adapted to push fit into an open recess, to be retained there by an interference-fit i.e. simple frictional engagement between the device external surfaces and the recess internal surfaces may suffice in many cases. However, in some cases use of a pressure-sensitive or peelable adhesive may be useful for assisting retention of the device in place, especially when the component of the pallet housing the device is of a synthetic material. A still further alternative may be to utilise a releasable mechanical fixing such as a nail, pin or screw or the like fastener, or hook and fibre loop entanglement patches e.g. Velcro*.

It will be understood that the load-infestation monitoring device becomes to all intents and purposes an integral part of the pallet in normal use thereof, and common sense dictates that care would be taken in designing the pallet to locate the device remote from surfaces liable to be contacted by the handling equipment, e.g. the lifting forks of a lift-loader.

The number of monitoring devices per pallet is not restricted, thus the pallet may further comprise a load-condition monitoring device. The load-conditions that may be thereby monitored are virtually unlimited, the only limitations being perhaps the expense of the device to be integrated into the pallet. Thus one may include a temperature sensor, which may be adapted to permanently record an extreme of temperature to which the load has been exposed. The ability to record the "highest temperature" is already commonly used in medical thermometers for example. Similarly, humidity and pressure conditions can be recorded using hygrometers and barometric devices.

It is preferred that the monitoring device is replaceable, but for some purposes the device may be an integral component that is built into the pallet during manufacture thereof and the device itself is adapted to release a replaceable part e.g. a removable cassette, or disposable detection medium such as a chemically treated substrate such as a reagent coated strip of paper or the like.

Thus according to another aspect of the invention there is provided a pallet comprising at least a load-bearing deck and bearer members therefor, and having an integral load-infestation monitoring device located beneath the load-bearing deck and accessible from a side of the pallet for inspection purposes.

In a particularly advantageous application of the invention, an infestible commodities load carried upon a pallet can be monitored for contamination by pests such as insects or mites without needing to unpack the load and sample or otherwise directly inspect the goods packed upon the pallet. Thus, the load-infestation monitoring device may comprise an arthropod trap.

Stored product arthropod pest management is a critical problem for many suppliers, distributors and retail outlets such as chain stores. Stored foods can be subject to significant infestation by the introduction of a single contaminated pallet-borne load. The nature of the pest, particularly its size, and typical nocturnal activity of many such pests is such that routine product quality controls in warehouses e.g. product inspections upon receipt, or relying upon product warranties, product rotation within specified periods, regular visual ("walk-through") inspections, and finally customer complaints, tend to be unsatisfactory in eradicating the problem and there is an element of chance in such inspections successfully detecting a contamination. Prevention is the preferred approach and whilst it is unrealistic to expect that to be completely achievable, the risks are remarkably reduced if the products could be screened better before being put into storage, ideally by providing for quality monitoring in transit.

Therefore, according to a still further aspect of the invention there is provided a method of monitoring the quality of goods susceptible to infestation, that includes providing a pallet comprising at least a load-bearing deck and bearer members therefor, and having a load infestation monitoring device located beneath the load-bearing deck and accessible from a side of the pallet for inspection purposes, loading the goods on the pallet, and periodically inspecting the load infestation monitoring device for evidence of infestation.

If a cover is to be used over a recess in the pallet that is to house the trap, then it must be provided with at least one aperture that is dimensioned to permit access to the trap by the target pest, or so positioned or fastened that the target pest can still gain access to the trap.

The arthropod trap may be any of the known type of pheromone/food attractant traps ("PFAT") and may be integrated into the pallet construction as a trap housing into which replaceable lure and trap components are inserted, ideally as a replaceable cassette, or the trap may be a discrete component that is attachable to the pallet by insertion into a suitable recess provided in the pallet, e.g. in one of the bearers.

The existing procedures and industry practices for recommended use of on-site placement of PFATs can be adopted for this new application in the improved pallet of the invention.

A possible embodiment of the trap would comprise a clear plastics cover, which permits ease of visual inspection, and apertures in its casing to permit access by the pests to the lure within the trap and a trap surface having an adhesive surface which retains the pest once it has penetrated the trap.

The trap may be a broad spectrum combined lure trap for general use, or it may be designed to target a specific pest or type of pest for goods that are targeted by a predicted species of pests. The trap may contain a corrugated cardboard insert supporting the lure and optionally include a plastic tray for the food attractant such as an oil. A replaceable glue coated insert may be used as the trap component for arthropod retention. In some cases a pitfall type trap may be adopted and incorporated in the pallet.

Pheromone lures are intended to target the adults and are considered to be highly effective, whilst food attractant lures are also effective for long-lived adults and some larvae. Food attractant lures include oat oil, wheat germ oil extracts and mineral oil. The advantage of food attractant lures is that they have relatively smaller effective range than pheromone lures and so it is more likely than not that when a pallet trap is found to be contaminated, the load on that pallet is also contaminated and should be removed from stock or goods in transit.

According to a yet further aspect of the present invention, there is provided a use of a pallet according to the first or second aspect of the present invention for monitoring quality of goods in transit as a load upon the pallet.

Thus, the aforesaid method of the invention can be usefully employed throughout the period between initial pallet loading and storage, goods in transit period, intermediate way-point storage, and storage at end-point destination. A key advantage of the method lies in the ability to pinpoint which particular pallet may be carrying a contaminated load, permitting that pallet to be.isolated before the infestation migrates to other adjacent loads. A further advantage lies in the ability to interrupt goods in transit to arrest contamination before a complete load is spoiled. This facilitates a reduction in risk carried by the ultimate consignee and also offers benefits to the transport industry due to the greater likelihood of detecting a contaminated load as it is shifted from one way point to another or transferred between modes of transport.

The opportunity to train personnel in the use of the trap within a matter of less than a minute, to inspect and refresh or replace traps in the pallet is an additional advantage offered by the invention.

The invention will now be described more fully below by way of example with reference to the accompanying drawings in which,
Fig. 1 is perspective view from above of a typical pallet design, modified to include an integral load-infestation monitoring device in a deck support block;
Fig. la is an enlarged detail view of a modified deck bearer forming part of the pallet shown in Fig. 1 which shows an arthropod trap recessed into the bearer; and

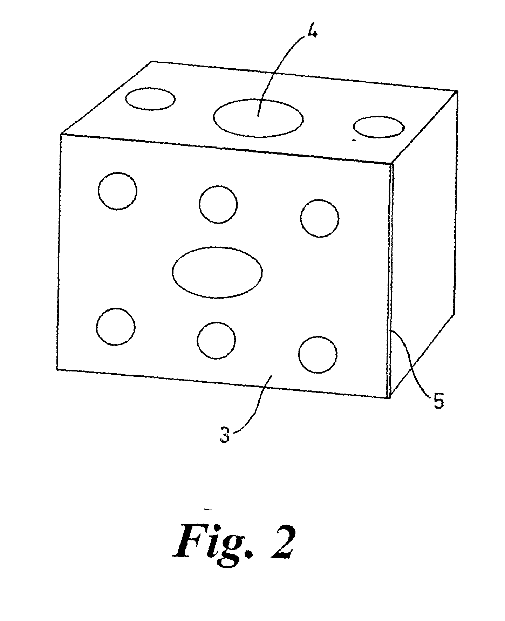

Fig. 2 shows an arthropod trap that is suitable for incorporation in a modified pallet of the invention.

### Modes for Carrying out the invention

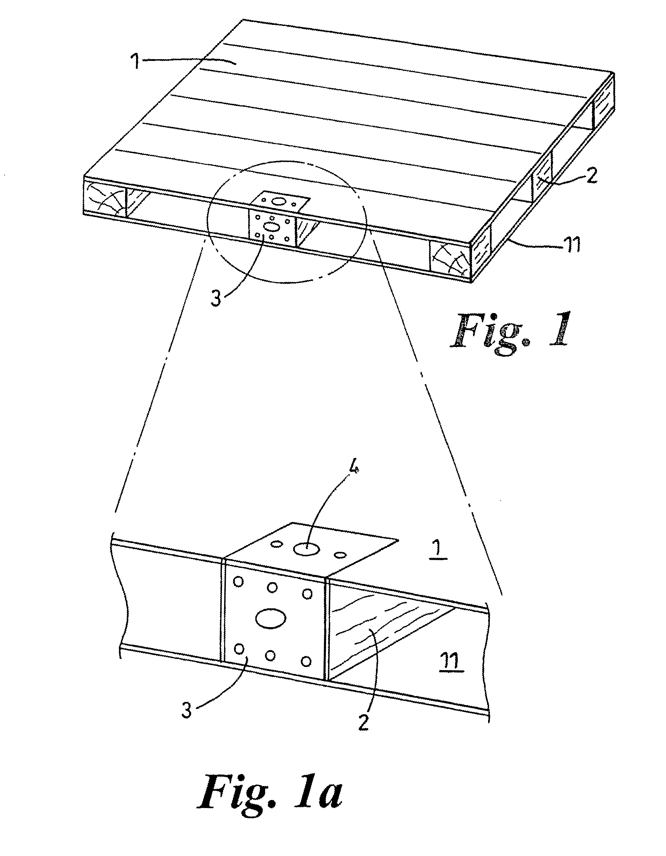

The pallet shown in Figure 1, has an upper rectangular load deck 1, supported upon bearers 2, the arrangement being that the load deck is supported at each corner and also at a position intermediate each side edge, leaving voids under the load deck for access by lifting forks, as is conventional. The pallet shown is invertible and has another load deck 11 attached to the bearers. One of the bearers is adapted to accept a Pheromone and Food Attractant Trap ("PFAT") 3, by insertion into a recess provided in the bearer. The PFAT is integrated into the pallet by an interference fit into the bearer. The PFAT is foraminated to provide various apertures 4, which permit access into the PFAT and also air circulation through the PFAT which permits release of pheromone and food attractant odours to the air around the pallet.

The casing 5, of the PFAT in this embodiment is made of a tough clear plastics material, of which there are many alternatives available on the market, to facilitate inspection. The casing houses a corrugated cardboard insert (not shown) that has been doped with the pheromone lure and also houses an oil coated member (not shown) which acts as a food attractant and is often selected for its toxicity to arthropods, thereby providing a dual-purpose role. The nature of such lures is familiar to those in the art and needs no special explanation here. The PFAT also includes a glue board (not shown) which has an aggressively tacky surface that serves as the trap element from which a pest such as an arthropod, once in contact therewith, cannot free itself.

In a preferred embodiment, the necessary elements of the PFAT are conveniently provided by attaching a combined bait and pheromone tablet to the glue board, thereby providing a single element to be introduced to the casing of the PFAT. This arrangement permits rapid maintenance of the PFAT when a contaminated load is identified by removal of a contaminated glue board for pest evaluation by counting or other analysis and insertion of another glue board. The recovered pallet with refreshed PFAT is then ready for use again.

In normal use of the modified pallet with integral PFAT, as described, the pallet is loaded in the usual way and the PFAT is checked to ensure that it is free from trapped pests, and contains the appropriate lures and that they have not deteriorated. The loaded pallet can then be despatched or put into storage as required. At the next point of inspection, e.g. an intermediate way point in transit, where the load is transferred to another mode of transport or into a storage facility to await onward shipment, the PFAT is readily checked by simple visual inspection of the side of the pallet. Any pests in the products loaded on the pallet would have sensed the presence of the lure in the PFAT and left the products to investigate the lure. In the effort to reach the source of the pheromone or the food attractant bait, the pest would have entered the casing of the PFAT where it would have become entrapped upon the glue board. Visual inspection of the PFAT would reveal this. A pallet that appears to be contaminated can then be isolated, and the products in the load removed for analysis or destruction. Adjacent pallets in proximity to the contaminated pallet can be similarly checked out.

In alternative embodiments, the pallet may be of plastics construction and the PFAT may be supplemented by the presence of a device for monitoring another element of load condition such as temperature or humidity for example.

### Industrial Applicability

The modified pallet of this invention finds a use in the food distribution and hygiene industries and in the field of biomedical technology.

## Claims

1. A pallet comprising at least a load-bearing deck (1) and bearer members (2) therefor, **characterised in that** the pallet has an accessible component located beneath the load-bearing deck and accessible from a side of the pallet, said component retaining a load-infestation monitoring device (3).

2. A pallet according to claim 1, in which the load-infestation monitoring device is configured to provide a visible indication of infestation.

3. A pallet according to claim 1 or 2, in which the load-infestation monitoring device is of a conventional type comprising a lure for attracting a pest of a type known to cause infestation.

4. A pallet according to any preceding claim, in which the accessible component is one of the bearer members which is provided with a recess or compartment that is accessible from an exposed end-face or side of the bearer member.

5. A pallet according to claim 4, in which the recess is provided with a cover to provide a chamber within which the load-infestation monitoring device is located.

6. A pallet according to claim 4 or 5, in which the load-infestation monitoring device is adapted to push fit into the recess, to be retained there by an interference-fit.

7. A pallet according to any preceding claim, in which a pressure-sensitive or peelable adhesive is used for assisting retention of the load-infestation monitoring device in place.

8. A pallet according to any preceding claim, in which a releasable mechanical fixing is used for assisting retention of the load-infestation monitoring device in place.

9. A pallet according to any preceding claim further comprising a load-condition monitoring device.

10. A pallet according to any preceding claim, in which the monitoring device itself is adapted to release a replaceable part or disposable detection medium.

11. A pallet comprising at least a load-bearing deck and bearer members therefor, and having an integral load-infestation monitoring device located beneath the load-bearing deck and accessible from a side of the pallet.

12. A method of monitoring the quality of goods susceptible to infestation, that includes providing a pallet comprising at least a load-bearing deck (1) and bearer members (2) therefor, **characterised by** having a load-infestation monitoring device (3) located beneath the load-bearing deck and accessible from a side of the pallet for inspection purposes, loading the goods on the pallet, and periodically inspecting the load-infestation monitoring device for evidence of infestation.

13. Use of a pallet according to any one of claims 1 to 12 for monitoring quality of goods in transit as a load upon the pallet.

## Patentansprüche

1. Palette, die wenigstens ein Güter tragendes Deck (1) und Trägerelemente (2) dafür aufweist, **dadurch gekennzeichnet, dass** die Palette ein zugängliches Teil aufweist, das unterhalb des die Güter tragenden Decks angeordnet und von einer Seite der Palette her zugänglich ist, wobei das Teil eine Vorrichtung (3) zur Überwachung der Güter auf Schädlingsbefall aufnimmt und hält.

2. Palette nach Anspruch 1, bei der die Vorrichtung zur Überwachung der Güter auf Schädlingsbefall dazu eingerichtet ist, eine visuelle Anzeige für einen Befall vorzusehen.

3. Palette nach Anspruch 1 oder 2, bei der die Vorrichtung zur Überwachung der Güter auf Schädlingsbefall von einer herkömmlichen Bauart ist, die eine Lockmittel aufweist, das dazu dient, einen Schädling eines Typs anzuziehen, der als Ursache für einen Befall bekannt ist.

4. Palette nach einem beliebigen der vorhergehenden Ansprüche, bei der die zugängliche Komponente eines der Trägerelemente ist, das mit einer Aussparung oder einer Kammer ausgebildet ist, die von einer nach außen zeigenden Stirnfläche oder Seite des Trägerelements her zugänglich ist.

5. Palette nach Anspruch 4, bei der die Aussparung mit einer Abdeckung versehen ist, um eine Kammer zu schaffen, innerhalb der die Vorrichtung zur Überwachung der Güter auf Schädlingsbefall angeordnet ist.

6. Palette nach Anspruch 4 oder 5, bei der die Vorrichtung zur Überwachung der Güter auf Schädlingsbefall dazu eingerichtet ist, sich passend in die Aussparung drücken zu lassen, um darin durch Reibschluss festgehalten zu werden.

7. Palette nach einem beliebigen der vorhergehenden Ansprüche, in der ein auf Druck ansprechender oder abziehbarer Klebstoff verwendet wird, um den Halt der Vorrichtung zur Überwachung der Güter auf Schädlingsbefall an Ort und Stelle zu unterstützen.

8. Palette nach einem beliebigen der vorhergehenden Ansprüche, in der eine lösbare mechanische Befestigung verwendet wird, um den Halt der Vorrichtung zur Überwachung der Güter auf Schädlingsbefall an Ort und Stelle zu unterstützen.

9. Palette nach einem beliebigen der vorhergehenden Ansprüche, zu der ferner eine Vorrichtung zur Überwachung der Güter auf Schädlingsbefall gehört.

10. Palette nach einem beliebigen der vorhergehenden Ansprüche, bei der die Überwachungsvorrichtung selbst dazu eingerichtet ist, eine austauschbare Komponente oder ein Einwegdetektionsmittel freizusetzen.

11. Palette, die wenigstens ein Güter tragendes Deck und Trägerelemente dafür aufweist, und mit einer integralen Vorrichtung zur Überwachung der Güter auf Schädlingsbefall versehen ist, die unterhalb des Güter tragenden Decks angeordnet und von einer Seite der Palette her zugänglich ist.

12. Verfahren zum Überwachen der Qualität von für Befall anfälligen Gütern, mit den Schritten: Bereitstellen einer Palette, die wenigstens ein Güter tragendes Deck (1) und Trägerelemente (2) dafür aufweist, **dadurch gekennzeichnet, dass** eine Vorrichtung (3) zur Überwachung der Güter auf Schädlingsbefall vorgesehen ist, die unterhalb des Güter tragenden Decks angeordnet und für Überprüfungszwecke von einer Seite der Palette her zugänglich ist, Laden der Güter auf die Palette und periodisches Inspizieren der Vorrichtung zur Überwachung der Güter auf Schädlingsbefall hinsichtlich des Nachweises eines Befalls.

13. Verwendung einer Palette nach einem beliebigen der Ansprüche 1 bis 12, um die Qualität von auf der Palette geladenen Transportgütern zu überwachen.

## Revendications

1. Palette comprenant au moins un plancher de chargement (1) et des éléments de support (2) de celui-ci, **caractérisée en ce que** la palette a un composant accessible situé en dessous du plancher de chargement et accessible à partir d'un côté de la palette, ledit composant retenant un dispositif de surveillance d'infestation du chargement (3).

2. Palette selon la revendication 1, dans laquelle le dispositif de surveillance d'infestation du chargement est configuré de manière à fournir une indication visible d'infestation.

3. Palette selon la revendication 1 ou 2, dans laquelle le dispositif de surveillance d'infestation du chargement est du type classique comprenant un leurre pour attirer un parasite d'un type connu pour provoquer une infestation.

4. Palette selon l'une quelconque des revendications précédentes, dans laquelle le composant accessible est l'un des éléments de support qui est doté d'un évidement ou d'un compartiment qui est accessible à partir d'une face d'extrémité ou d'un côté exposé de l'élément de support.

5. Palette selon la revendication 4, dans laquelle l'évidement est doté d'un couvercle pour fournir une chambre à l'intérieur de laquelle se trouve le dispositif de surveillance d'infestation du chargement.

6. Palette selon la revendication 4 ou 5, dans laquelle le dispositif de surveillance d'infestation du chargement est conçu pour être correctement ajusté dans l'évidement, pour y être retenu grâce à un ajustement par serrage.

7. Palette selon l'une quelconque des revendications précédentes, dans laquelle on utilise un adhésif autocollant ou pelable pour faciliter le maintien en place du dispositif de surveillance d'infestation du chargement.

8. Palette selon l'une quelconque des revendications précédentes, dans laquelle on utilise une fixation mécanique détachable pour faciliter le maintien en place du dispositif de surveillance d'infestation du chargement.

9. Palette selon l'une quelconque des revendications précédentes, comprenant en outre un dispositif de surveillance de l'état du chargement.

10. Palette selon l'une quelconque des revendications précédentes, dans laquelle le dispositif de surveillance proprement dit est conçu pour libérer une partie remplaçable ou un moyen de détection jetable.

11. Palette comprenant au moins un plancher de chargement et des éléments de support de celui-ci, et ayant un dispositif de surveillance d'infestation du chargement intégral situé en dessous du plancher de chargement et accessible à partir d'un côté de la palette.

12. Procédé permettant de surveiller la qualité des marchandises sujettes à l'infestation, qui inclut la fourniture d'une palette comprenant au moins un plancher de chargement (1) et des éléments de support (2) de celui-ci, **caractérisé en ce qu'**elle a un dispositif de surveillance d'infestation du chargement (3) situé en dessous du plancher de chargement et accessible à partir d'un côté de la palette à des fins d'inspection, le chargement des marchandises sur la palette, et l'inspection périodique du dispositif de surveillance d'infestation du chargement pour vérifier la présence ou non d'une infestation.

13. Utilisation d'une palette selon l'une quelconque des revendications 1 à 12 permettant de surveiller la qualité des marchandises en transit en tant que chargement sur la palette.
